# EUROPÄISCHE PATENTSCHRIFT

(11) **EP 0 523 444 B1**
(45) Veröffentlichungstag und Bekanntmachung des Hinweises auf die Patenterteilung: **15.02.1995**
(21) Anmeldenummer: 92111049.0
(22) Anmeldetag: 30.06.1992
(51) Int. Cl.: B65G 17/42

(54) **Fördergut mit Mitnehmerteilen**
Conveying belt with carrier means
Courroie de transport avec des éléments d'accouplement

(30) Priorität: 17.07.1991 DE 4123607
(43) Veröffentlichungstag der Anmeldung: 20.01.1993
(73) Patentinhaber: Continental Aktiengesellschaft, 30165 Hannover (DE)
(72) Erfinder: Flebbe, Heinrich, Dr., D-30926 Seelze (DE)

(56) Entgegenhaltungen:
- EP-A- 0 277 258
- DE-A- 2 641 089
- US-A- 4 475 647
- Soviet Patents Abstracts, Sektion Q, Woche 90/46, 7. April 1990, Derwent Publications Limited, London (GB), Seiten 13 und 14

## Beschreibung

Die Erfindung betrifft einen Fördergurt gemäß dem Oberbegriff des Patentanspruchs 1.

Fördergurte werden in Stetigförderern für die Förderung von Schütt- und Stückgütern eingesetzt. Je nach dem zu lösenden Förder- und Transportproblem können die Fördergurte konstruktiv angepaßt werden. Für den Einsatz bei der vertikalen Schüttgutförderung ist es bekannt, auf der Tragseite des Fördergurtes Becher anzuordnen. Die Becherbefestigung kann mittels Tellerschrauben erfolgen, die aber eine Lochung des Gurtes erforderlich machen. Hieraus entstehen gewisse Nachteile, die in einem Festigkeitsabfall des Gurtes und einem Eindringen von Feuchtigkeit und Fördergut in die Lochbohrungen zu sehen sind. Eine weitere Befestigungsmöglichkeit der Becher ist durch auf den Fördergurt aufvulkanisierte bzw. geklebte Gummihalterungen gegeben.

Diese beiden prinzipiellen Befestigungen von Förderbauteilen werden auch bei Gurtförderern zur Förderung von Stückgütern und Transportgestellen eingesetzt. Beispielsweise werden im innerbetrieblichen Transport in Automobilfabriken Stauförderer eingesetzt, die Transportrahmen (sogenannte Skids) fördern. Dabei sind auf der Tragseite des Fördergurtes den Rahmen tragende und fördernde Staurollen angeordnet, die jeweils von einem Schlepphebel gezogen werden, der seinerseits in einem aufvulkanisierten Gummiblock gelagert ist. Seitliche Stützrollen kleineren Durchmessers nehmen die Last auf und tragen sie auf seitlich neben dem Fördergurt verlaufende Schienen ab. Im Förderzustand wird der Rahmen mitbewegt; im Stauzustand laufen die Staurollen an der Unterfläche des stillstehenden Rahmens ab. Eine derartige Transportvorrichtung ist aus EP 0 277 258 B1 bekannt.

Die konstruktive Anbringung der Staurolle bzw. ihres Schlepphebels an dem Fördergurt ist sehr aufwendig. Das Aufvulkanisieren oder Aufkleben der Gummihalterung ist in der Verbindungsqualität sehr stark abhängig von der Ausführung durch die Montageperson. Dazu kommt, daß bestimmte Sorten des Deckplattengummis nicht klebbar sind.

Der Erfindung liegt die Aufgabe zugrunde, an einem glatten Fördergurt Anschlagmöglichkeiten für mit geringem technischen und zeitlichen Aufwand anzuordnende Mitnehmerteile zu schaffen.

Die Aufgabe wird erfindungsgemäß durch die im Anspruch 1 aufgeführten Merkmale gekennzeichnet.

Das U-förmige Befestigungsunterteil des Mitnehmerteils ragt mit seinen offenen Schenkeln nach oben. Auf der Deckplattenoberfläche der Tragseite des Fördergurtes liegt das Befestigungsoberteil als Stützteil auf. Das Oberteil ist mit den nach oben gerichteten Schenkeln verbunden, wobei der Formschluß des Mitnehmerteiles mit dem Fördergurt durch die in der Laufseite des Fördergurtes eingearbeitete Quernut erzielt wird. Das Mitnehmerteil umfaßt den Fördergurt und ist durch eine einfache Verbindung formschlüssig positionierbar. Die Positionierung kann nachträglich durch Einsatz in eine neue Quernut geändert werden. Dieses ist besonders von Vorteil, wenn mit dem Mitnehmerteil Gegenstände größerer Länge ausgewogen gefördert und transportiert werden sollen.

Eine vorteilhafte Ausgestaltung der Erfindung wird im Anspruch 2 gekennzeichnet. Durch diese Anordnung können Mitnehmerteile geringerer Breite als der des Fördergurtes eingesetzt werden.

Eine weitere vorteilhafte Ausgestaltung wird durch die Merkmale des Anspruchs 3 gekennzeichnet. Die Montage des Förderbauteils auf dem Fördergurt wird weiter erleichtert, da eine Ausrichtung von Ober- und Unterteil über das Führungsleistenpaar sicher gegeben ist.

Eine weitere vorteilhafte Ausgestaltung der Erfindung wird im Kennzeichen des Anspruchs 4 offenbart. Die das Ober- und Unterteil verbindende Achse trägt direkt ein Tragorgan.

Gemäß Anspruch 5 ist auf der Achse ein schwenkbarer Becher oder eine drehbare Staurolle angeordnet. Der bei herkömmlichen Stauförderern notwendige, in einem Gummihalterblock gelagerte Schlepphebel ist nicht mehr notwendig. Der Fördergurt kann ohne zusätzliche konstruktive Änderungen reversierend betrieben werden.

Durch die Erfindung wird ein Fördergurt geschaffen, bei dem das Mitnehmerteil im wesentlichen zweiteilig ausgebildet ist, wobei Ober- und Unterteil in unveränderlichem Abstand zueinander stehen und den Fördergurt zwischen sich einfassen. Dadurch wird eine vereinfachte Befestigungsmethode von Mitnehmerteilen an einem Fördergurt geschaffen. Die Mitnehmerteile, die mit ihrem Förder- oder Tragorgan unterschiedlich ausgebildet werden können, ergeben eine erheblich leichtere Konstruktion und ermöglichen ein geringeres Transportvolumen des Fördergurtwickels.

Anhand der Zeichnung werden nachstehend zwei Ausführungsbeispiele der Erfindung näher erläutert. Es zeigt
- Fig. 1: ein formschlüssig an einen Fördergurt befestigtes Mitnehmerteil, das eine Staurolle aufweist,
- Fig. 2: eine andere perspektivische Ansicht der Anordnung gemäß Fig. 1 unter Fortlassung der Staurolle,
- Fig. 3: in schematischer Darstellung eine modifizierte Anordnung des Unterteils eines Mitnehmerteiles.

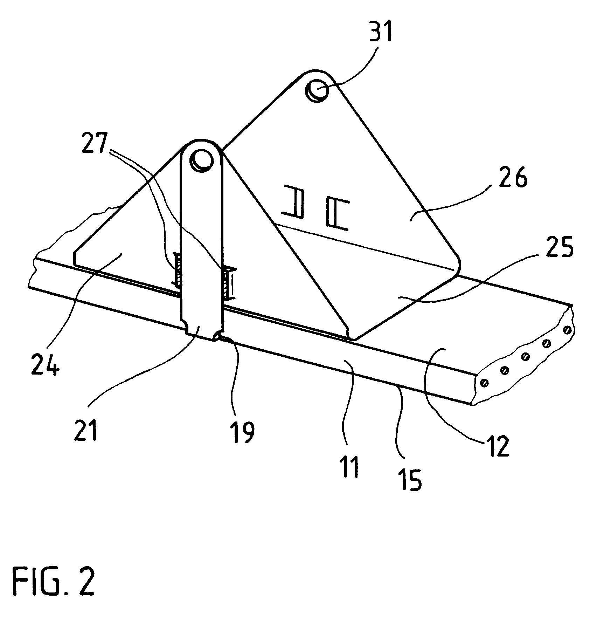

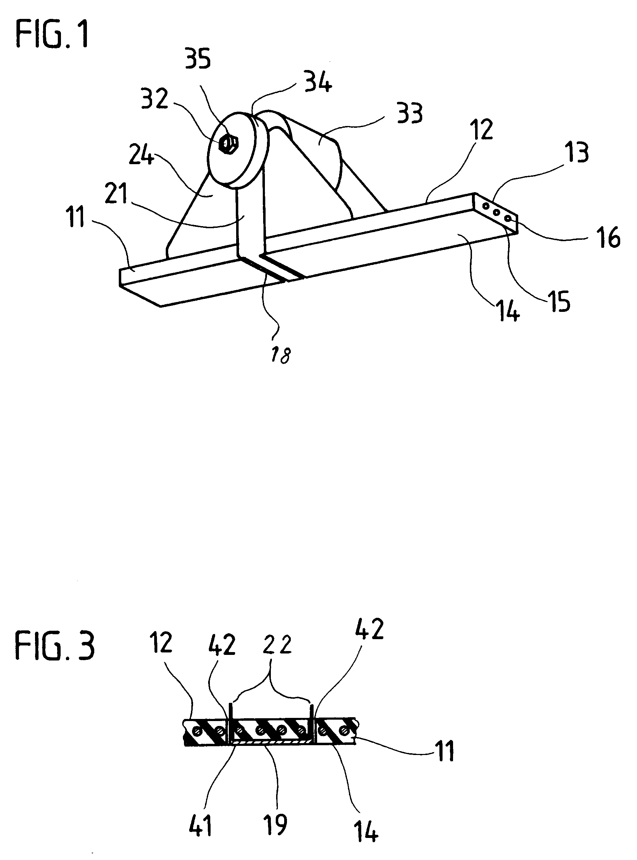

Der in Fig. 1 gezeigte, abschnittsweise dargestellte Fördergurt 11 weist auf seiner Tragseite 12 eine Deckplatte 13 aus Gummi und auf seiner Laufseite 14 ebenfalls eine Deckplatte 15 aus Gummi auf, zwischen denen eine Verstärkungseinlage 16 aus parallelverlaufenden Stahlseilen eingebettet ist. Die Laufseite 14 des Fördergurtes 11 ist mit einer Quernut 18 versehen. In dieser Quernut 10 liegt die Basis 19 eines aus einem Blechstreifen hergestellten, U-förmigen Befestigungsunterteils 21. Die flachen Schenkel 22 des Befestigungsunterteils 21 ragen seitlich am Fördergurt 11 senkrecht nach oben und nehmen zwischen sich ein Befestigungsoberteil 24 auf.

Das Befestigungsoberteil 24 weist einen Boden 25 auf, der flach aufliegt und in etwa der Breite des Fördergurtes 11 entspricht. An seinen Seiten ragen dreieckförmige Wände 26 nach oben, die auf ihrer Außenseite jeweils ein Führungsleistenpaar 27 in Form von Metallsicken tragen.

Die Schenkel 22 des Befestigungsunterteils 21 liegen zwischen den beiden Führungsleistenpaaren 27 eines jeden Paares, so daß Befestigungsunterteil 21 und Befestigungsoberteil 24 zueinander ausgerichtet sind.

In den oberen Enden der Schenkel 22 des Befestigungsunterteils 21 und der Wände 26 des Befestigungsoberteils 24 sind korrespondierende Bohrungen 31 (Fig. 2) eingebracht, durch die eine Achse 32 geschoben ist. Die Achse 32 trägt zwischen den Wänden 26 des Befestigungsoberteils 24 eine drehbare Staurolle 33 und außerhalb der Wände 26 jeweils eine Stützrolle 34 kleineren Durchmessers. Die Befestigung der Rollen wird über eine Mutter-Gewindeanordnung 35 an den Enden der Achse 32 erreicht.

Die Ausbildung gemäß Fig. 3 zeichnet sich dadurch aus, daß die die Basis 19 des U-förmigen Unterteils aufnehmende Quernut 41 in der Laufseite 14 des Fördergurtes 11 nur einer zentrierten Teilbreite des Gurtes 11 entspricht. An den Enden der Quernut 41 durchdringen senkrechte Schlitze 42 den Fördergurt 11, wobei die Schlitze 42 in Längsrichtung ausgerichtet sind. An dieses derartig eingesteckte Befestigungsunterteil 21 wird ein hier nicht gezeigtes Befestigungsoberteil, das sich auf der Tragseite 12 des Fördergurtes abstützt, befestigt.

Die Montage des vorstehend beschriebenen Förderbauteiles ist wie folgt:
Auf der Laufseite 14 wird an der gewünschten Position eine Quernut 19 in die Deckplatte 15 eingeschnitten. Das U-förmige Befestigungsunterteil 21 wird den Fördergurt 11 umgreifend von der Laufseite her aufgesteckt. Das Befestigungsoberteil 24 wird in der entsprechenden Stellung auf die Tragseite 12 gesetzt, wobei Befestigungsoberteil 24 und -unterteil 21 durch das Führungsleistenpaar 27 zueinander zentriert werden. Dadurch decken sich die Bohrungen in den Endbereichen von Befestigungsoberteil 24 und Befestigungsunterteil 21. Die Achse 32 wird quer zum Fördergurt 11 durch die ersten Bohrungen eines Schenkels 22 und einer Wand 26 des Befestigungsoberteils 24 geführt und gleichzeitig die Staurolle 33 auf die Achse 32 aufgeschoben. Die Achse 32 wird dann durch die gegenüberliegenden Bohrungen von Befestigungsunter- und -oberteil geführt. Nach Aufstecken der beiden Stützrollen 34 werden diese mittels einer Mutter 35, die auf dem mit einem Gewinde versehenen Endabschnitt der Achse 32 aufgeschraubt wird, gegen einen hier nicht dargestellten Bund auf der Achse 32 gesichert.

## Patentansprüche

1. Fördergurt (11) aus elastomerem Werkstoff mit eingebetteten, Zugkräfte aufnehmenden Verstärkungseinlagen (16) und mit angeordneten Mitnehmerteilen, die formschlüssig mit dem Fördergurt (11) verbunden sind,
**gekennzeichnet durch folgende Merkmale:**
- die Mitnehmerteile weisen jeweils ein Befestigungsunterteil (21) und ein Befestigungsoberteil (24) auf,
- die Befestigungsunterteile (21) sind U-förmig ausgebildet und liegen mit ihrer Basis (19) in jeweils einer Quernut (18) in der Laufseite (14) des Fördergurtes,
- jedes Befestigungsoberteil (24) ist, sich auf der Tragseite (12) des Fördergurtes (11) abstützend, mit den nach oben gerichteten Schenkein (22) des Befestigungsunterteils (21) verbunden.

2. Fördergurt nach Anspruch 1, dadurch gekennzeichnet, daß das Befestigungsunterteil (21) mit seiner Basis (19) nur über eine Teilbreite des Fördergurtes (11) reicht und mit seinen beiden, flach ausgebildeten Schenkeln (22) durch parallel zur Längsrichtung des Fördergurtes (11) angeordnete Schlitze (42) entsprechender Länge ragt.

3. Fördergurt nach Anspruch 1 oder 2, dadurch gekennzeichnet, daß das Befestigungsoberteil (24) zwei von einem auf der Tragseite (12) liegenden Boden (25) seitlich aufragende Wände (26) aufweist, die an der Außenseite jeweils ein senkrechtes Führungsleistenpaar (27) aufweisen, durch das die Schenkel (22) des Befestigungsunterteils (21) fixiert werden.

4. Fördergurt nach einem der Ansprüche 1 bis 3, dadurch gekennzeichnet, daß Befestigungsoberteil (24) und Befestigungsunterteil (21) über eine gemeinsame Achse (32) miteinander verbunden sind, die ein Tragorgan aufnimmt.

5. Fördergurt nach Anspruch 4, dadurch gekennzeichnet, daß das Tragorgan ein schwenkbarer Becher oder eine drehbare Staurolle (33) ist.

## Claims

1. Conveyor belt (11), formed from elastomeric material and provided with embedded reinforcing members (16), which absorb tensile forces, and with carrier members, which are disposed therein and are connected to the conveyor belt (11) in a form-locking manner, characterised by the following features:
- the carrier members each have a lower securing member (21) and an upper securing member (24),
- the lower securing members (21) have a U-shaped configuration and lie with their base (19) in a respective transverse groove (18) in the travel side (14) of the conveyor belt,
- each upper securing member (24) is supported on the carrying side (12) of the conveyor belt (11) and connected to the upwardly orientated legs (22) of the lower securing member (21).

2. Conveyor belt according to claim 1, characterised in that the lower securing member (21) extends with its base (19) over only part of the width of the conveyor belt (11) and protrudes with its two flat legs (22) through slots (42) of a corresponding length, said slots being disposed parallel to the longitudinal direction of the conveyor belt (11).

3. Conveyor belt according to claim 1 or 2, characterised in that the upper securing member (24) has two walls (26), which protrude laterally from a base (25) lying on the carrying side (12) and each have a pair of vertical guide rails (27) on the external surface, the legs (22) of the lower securing member (21) being secured by said pair of guide rails.

4. Conveyor belt according to one of claims 1 to 3, characterised in that the upper securing member (24) and the lower securing member (21) are interconnected via a common axle (32) which accommodates a carrying means.

5. Conveyor belt according to claim 4, characterised in that the carrying means is a pivotable cup or a rotatable impact roller (33).

## Revendications

1. Courroie de transport (11) en matière élastomère comprenant des armatures noyées (16) absorbant les forces de traction et sur laquelle sont disposés des éléments d'entraînement qui sont relies par complémentarité de formes à la courroie de transport (11),
caractérisée par les particularités suivantes ;
- chaque élément d'entraînement comprend un socle de fixation (21) et une charpente de fixation (24),
- les socles de fixation (21) ont une forme en étrier et chacune de leurs bases (19) est placée dans une rainure transversale (18) située sur le côté de roulement (14) de la courroie de transport,
- chaque charpente de fixation(24) qui prend appui sur le côté porteur (12) de la courroie de transport (11) est reliée aux ailes (22) du socle de fixation (21) qui sont orientées vers le haut.

2. Courroie de transport selon la revendication 1, caractérisée en ce que la base (19) du socle de fixation (21) n'occupe qu'une partie de la largeur de la courroie de transport (11) et ses deux ailes (22) qui sont planes passent par des fentes (42) de longueur correspondante qui sont parallèles à la direction de la longueur de la courroie de transport (11).

3. Courroie de transport selon la revendication 1 ou 2, caractérisée en ce que la charpente de fixation (24) comprend deux parois (26) qui montent latéralement d'un fond (25) reposant sur le côté porteur (12) et dont chacune comprend sur le côté extérieur deux barres verticales de guidage (27) qui arrêtent les ailes (22) du socle de fixation (21).

4. Courroie de transport selon l'une des revendications 1 à 3, caractérisée en ce que la charpente de fixation (24) et le socle de fixation (21) sont reliés l'une à l'autre par un axe commun (32) qui supporte un organe de support.

5. Courroie de transport selon la revendication 4, caractérisée en ce que l'organe de support est un godet basculant ou un rouleau rotatif de retenue (33).
